(19) Europäisches Patentamt
European Patent Office
Office européen des brevets

(11) **EP 1 835 659 B1**

(12) **EUROPEAN PATENT SPECIFICATION**

(45) Date of publication and mention
of the grant of the patent:
**29.08.2012 Bulletin 2012/35**

(51) Int Cl.:
***H04L 12/24*** *(2006.01)* ***H04L 12/26*** *(2006.01)*

(21) Application number: **06290434.7**

(22) Date of filing: **16.03.2006**

(54) **Method for determining actual traffic values and network elements therefor**

Verfahren zur Ermittlung von Verkehrsistwerten und Netzwerkelemente dafür

Procédé pour la détermination de valeurs réelles de trafic et éléments de réseau associés

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**19.09.2007 Bulletin 2007/38**

(73) Proprietor: **Alcatel Lucent
75007 Paris (FR)**

(72) Inventor: **Lauthenschläger, Wolfram
74343 Sachsenheim (DE)**

(74) Representative: **Mildner, Volker et al
Alcatel-Lucent Deutschland AG
Intellectual Property & Standards
Lorenzstrasse 10
70435 Stuttgart (DE)**

(56) References cited:
**WO-A-02/07473**

• **ROCH GUERIN ET AL: "EQUIVALENT CAPACITY
AND ITS APPLICATION TO BANDWIDTH
ALLOCATION IN HIGH-SPEED NETWORKS"
IEEE JOURNAL ON SELECTED AREAS IN
COMMUNICATIONS, IEEE SERVICE CENTER,
PISCATAWAY, NJ, US, vol. 9, no. 7, 1 September
1991 (1991-09-01), pages 968-981, XP000272772
ISSN: 0733-8716**

**Description**

The invention concerns methods for determining actual traffic values in a higher network access plane of a packet oriented network, according to the preambles of claims 1 and 5, and network elements for summing distributing data streams of a packet oriented network at the transition from a lower network plane to a higher plane, a cording to the preambles of claims 2 and 6.

Such methods and network elements are known from WO 02/07473 A, where the actually supplied resources are the basis for allocation and distributing of network resources.

Packet switched networks, if compared to circuit switched networks, are highly flexible and have low control overhead. The gain is commonly explained by statistical multiplexing, which means transmission without resource allocation in advance. This principle of operation relies on estimations of the probability to get the required resources on time even without reservation. In consequence, packet losses, even at low rate, are a calculated unavoidable risk of packet switched networks.

Nevertheless network resources have to be provided throughout the network at any time. Of course this cannot be made based on existing "connections" but only on a statistical basis. To do this it is known to allocate an effective bandwidth or an equivalent bandwidth to each link, for example from Roche Guérin et al., "Equivalent Capacity and Its Application to Bandwidth Allocation in High-Speed Networks", IEEE Journal on selected areas in communication, vol. 9, no. 7, September 1991. That is where the invention starts.

All such reservations suffer from the fact that the underlying data continuously change with ongoing development of new applications and technology, changing user behavior and pricing.

It is an object of the present invention to provide traffic values as a basis for quicker and even automatic adaptation of the network to the actual traffic situation.

This problem is solved according to the invention by methods according to the teachings of claims 1 and 5 and network elements according to the teachings of claims 2 and 6.

In the access area of a packet oriented network, where the traffic is concentrated from plane to plane, actual traffic values are extracted and prepared and made available to the respective higher plane or to the backbone network.

Further embodiments of the invention are to be found in the subclaims and the following description.

In the following the invention will be described with reference to the accompanying drawings:

Figure 1 shows a section of an access area of a packet-oriented network.

Figure 2 shows a network element of the access area shown in figure 1.

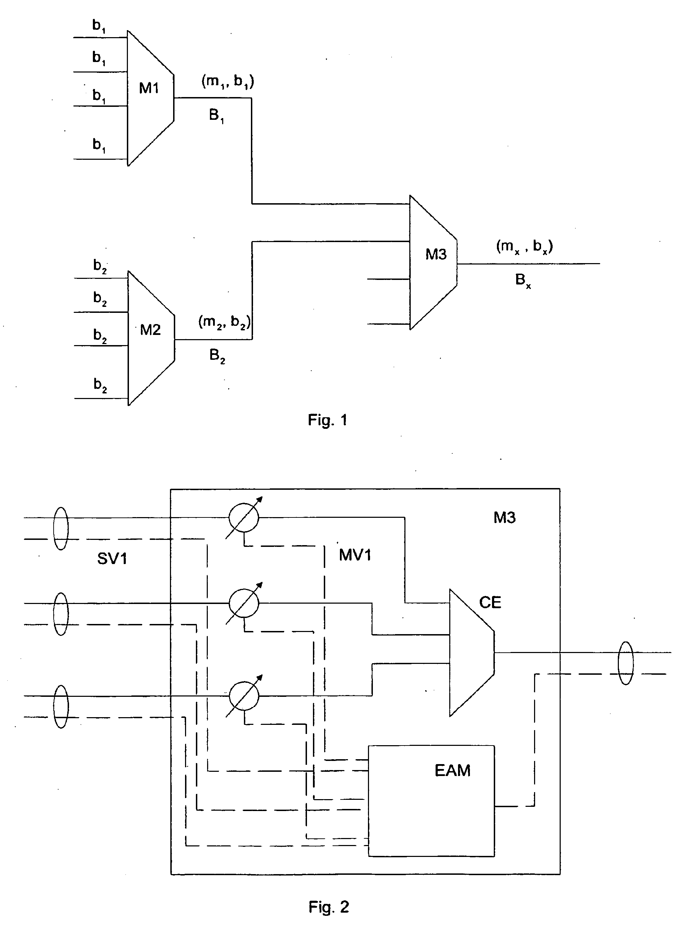

Based on figure 1 the principle of the invention will be described.

Figure 1 shows three network elements M1, M2, and M3 of an access area of a packet-oriented network.

These network elements have a concentrating function and are shown as concentrators.

Network elements M1 and M2 here represent the lowermost network access plane. In this plane it is assumed that all access lines to one and the same network element are of like nature, especially have the same access bandwidth. But it is assumed that access lines to different network elements may be of different nature, especially have different access bandwidths.

So all access lines to network element M1 are considered to have the access bandwidth $b_1$, and all access lines to network element M2 are considered to carry traffic, for which we assign an access bandwidth $b_2$. Further network elements of this network plane are not shown.

Network element M3 is an element in the next higher network plane compared to that of M1 and M2, in the special example of the second network plane. As this network element serves network elements with different access bandwidths, it has to cope with different equivalent access bandwidths.

Such equivalent access bandwidth value says something about the granularity of the traffic on the respective line. That is why at the outputs of the network elements M1 and M2 we have equivalent access bandwidths $b_1$ and $b_2$, respectively, equaling to the respective access bandwidths at their inputs.

The actual traffic loads on the access lines from the subscribers to the lowermost network elements do not play a role there, as on this lines the capacity is not shared amongst others and the lines cannot be overloaded.

At the outputs of the network elements M1 and M2 the actual mean traffic loads, here $m_1$ and $m_2$, have to be considered. As packet traffic always is variable, no other values than mean values are of relevance.

Now one can specify the required bandwidths at the outputs of the respective network elements.

When one assumes, that the actual traffic varies around the mean traffic according to Gauss, at the output of network element Mi one has to provide a bandwidth

$$B_i = m_i + \alpha \cdot \sigma_i, \qquad (1)$$

where $\alpha$ is a constant factor and $\sigma_i$ is the variance.

With

$$\alpha = \sqrt{2} \cdot erf^{-1}(1 - 2 \cdot P_{loss}), \qquad (2)$$

where

$erf^{-1}$ is the inverse error function (according to Gauss), and
$P_{loss}$ is the permitted loss probability, and with

$$\sigma_i = \sqrt{b_i \cdot m_i} \quad \text{one gets as a good approach}$$

$$B_i = m_i \left(1 + \alpha \sqrt{b_i / m_i}\right). \qquad (3)$$

Such bandwidths in the literature are called equivalent or effective bandwidths.

At the outputs of the until now considered network elements M1 and M2 this is of minor interest, because here the links to the upper next element, here M3, is a fixed link, whose capacity will remain unchanged. But this equation may be used at any other output of a network element, especially at the entrance to the core or backbone network, where the bandwidth to be granted can be influenced.

The equivalent access bandwidth $b_x$ at the output of network element M3 is a weighted mean value of the equivalent access bandwidths at its inputs:

$$b_x = \sum_{i=1}^{N} g_i b_i \qquad (4)$$

Good results arise with the following weighting factors:

$$g_i = \frac{m_i}{\displaystyle\sum_{i=1}^{N} m_i} \qquad (5)$$

For other network elements in this or in higher network planes like equations can be used.

These equations are based on certain assumptions that are considered to be realistic. Other assumptions may result in slightly different equations, maybe sometimes with the necessity to distinguish between different cases.

It can easily be seen, that the values necessary to specify the equivalent access bandwidth at the output of network element M3 normally is not available at such element. While it is possible to measure the mean traffic values $m_i$ at the inputs of network element M3, without further measurements the equivalent access bandwidths $b_i$ on the links to said inputs are not available.

At least at the lowermost network elements, here M1 and M2, the equivalent access bandwidth values for their inputs should be available within the elements, be it as values in a table or as a single value valid likewise for each input. Instead, of course, one value for the output's equivalent access bandwidth can be memorized. In the latter case one could have different sets of values for different situations, such as time of day or day of the week.

The same may be valid for the network plane above the lowest one, but for the highest plane this is considered not to be sufficient. Here it is recommended to signal the respective values from the dedicated lower network elements.

This results in network elements like the element M3 shown in figure 2.

The network element M3 in figure 2 shows a concentrating element CE, an extracting and analyzing means EAM, and a couple of lines representing the traffic and signaling flows. Drawn through lines indicate traffic flows, and dashed lines indicate signaling flows.

There are two types of signaling flows, namely signaled values like SV1, and measured values like MV1.

Here it is assumed that equivalent access bandwidth values $b_i$ are signaled from the preceding network element and mean traffic loads $m_i$ are measured at the respective inputs of the actual network element.

The mean traffic loads $m_i$ could as well be measured at the outputs of the preceding network element and signaled together with the equivalent access bandwidth values $b_i$.

In this example the signaled value SV1 is the equivalent access bandwidth value $b_1$; the measured value MV1 is the mean traffic load $m_1$.

Within the extracting and analyzing means EAM, the equivalent access bandwidth $b_x$ according to figure 1 is determined, preferably according to the above formulas.

Let us now assume that network element M3 be an element of the highest access network plane. Than the following network element would be part of the backbone network. Such element than would not need simply the equivalent access bandwidth value $b_i$ for the incoming traffic, but it should know the effective bandwidth $B_i$, here $B_x$, that is to be provided. This value either can be calculated at the input of the backbone network from the available values of the mean traffic load $m_x$, that could be measured at the input of the backbone network, together with the equivalent access bandwidth $b_x$, signaled from the previous network element, here M3.

Of course it would be possible to also extract and analyze the effective bandwidth value $B_x$ within the extracting and analyzing means EAM of the network element M3 and to signal this to the backbone network.

It can be seen, that in principle the same situation occurs for the downlink traffic. Here the necessary bandwidths depend on the possible output traffic at the outputs of the network elements in the lowermost network access plane. Again, the respective values could be extracted and analyzed in the same manner as above, the signaled value's flows and the traffic flows now being in directions opposite to one another.

As concentrating traffic and distributing traffic can be dealt with in the same way, the traffic in a switching element too can be dealt with in this way.

**Claims**

1.  Method for determining parameters in a higher network access plane (M3) of a packet oriented network, a network access plane comprising network elements (M1, M2, M3) with inputs from the respective lower plane and an output to the respective higher plane or to a backbone network, where in each plane, where data streams of an underlying plane are summed, parameters ($b_1$, $b_2$, $b_x$) of the elements of this plane are extracted by analyzing parameters ($b_1$, $b_2$, $m_1$, $m_2$) of the respective inputs and made available to the higher plane or to the backbone network via the respective element's output, **characterized in that** the parameters include measured traffic values (MV1) and signaled values (SV1), wherein the measured traffic values (MV1) are mean traffic loads and the signaled values (SV1) are equivalent access bandwidths, wherein the equivalent access bandwidth value $b_x$ signaled at the element's output is a weighted mean value based on the equivalent access bandwidths values $b_i$ signaled at the element's inputs and wherein the equivalent access bandwidth value $b_x$ is calculated as

$$b_x = \sum_{i=1}^{N} g_i b_i \, ,$$

with

$$g_i = \frac{m_i}{\sum_{i=1}^{N} m_i} \, ,$$

where N is the number of the element's inputs, and $m_i$ is the mean traffic load value measured at input i of the element.

2. Network element (M1, M2, M3) for summing data streams of a packet oriented network at the transition from a lower network plane (M1, M2) to a higher plane (M3), including input means, means (CE) for summing the data streams, an output means and extracting and analyzing means (EAM) for analyzing parameters ($b_1$, $b_2$, $m_1$, $m_2$) of the input means, **characterized in that** the extracting and analyzing means (EAM) are provided for analyzing parameters that include measured traffic values (MV1) and signaled values (SV1), where the measured traffic values (MV1) are mean traffic loads and the signaled values (SV1) are equivalent access bandwidths and provided for making available said parameters at the output, where the equivalent access bandwidth value $b_x$ signaled at the element's output is a weighted mean value based on the equivalent access bandwidths values $b_i$ signaled at the element's inputs and where the equivalent access bandwidth value $b_x$ is calculated as

$$b_x = \sum_{i=1}^{N} g_i b_i \ ,$$

with

$$g_i = \frac{m_i}{\sum_{i=1}^{N} m_i} \ ,$$

where N is the number of the element's inputs, and $m_i$ is the mean traffic load value measured at input i of the element.

3. Method according to claim 1, **characterized in, that** in higher network planes actual network resources ($B_x$) are provided depending on the extracted parameters.

4. Method according to claim 3, **characterized in, that** following to an output of an element an effective bandwidth B is provided, where

$$B = m \cdot \left(1 + \alpha \sqrt{\frac{b_x}{m}}\right) ,$$

with

$$\alpha = \sqrt{2} \cdot erf^{-1}\left(1 - 2 \cdot P_{loss}\right) ,$$

m being the actual mean traffic load on this elements output,
$P_{loss}$ being the permitted loss probability, and
$erf^{-1}$ being the inverse error function.

5. Method for determining parameters in a higher network acces plane of a packet oriented network, a network access plane comprising network elements (M1, M2, M3) with outputs to the respective lower plane and an input from the respective higher plane or from a backbone network, where in each plane, where data streams of an overlying plane are distributed, parameters ($b_1$, $b_2$, $b_x$) of the elements of this plane are extracted by analyzing parameters ($b_1$, $b_2$, $m_1$, $m_2$) of the respective outputs and made available to the higher plane or to the backbone network via the respective element's output, **characterized in that** the parameters include measured traffic values (MV1) and signaled values (SV1), wherein the measured traffic values (MV1) are mean traffic loads and the signaled values (SV1) are equivalent access bandwidths, wherein the equivalent access bandwidt value $b_x$ signaled at the element's input is a weighted mean value based on the equivalent access bandwidths values $b_i$ signaled at the element's outputs and wherein the equivalent access bandwidth value $b_x$ is calculated as

$$b_x = \sum_{i=1}^{N} g_i b_i \; ,$$

with

$$g_i = \frac{m_i}{\sum_{i=1}^{N} m_i} \; ,$$

where N is the number of the element's outputs, and $m_i$ is the mean traffic load value measured at output i of the element.

6. Network element (M1, M2, M3) for distributing data streams of a packet oriented network at the transition from a higher network plane (M3) to a lower plane (M1, M2), including an input means, means for distributing the data streams, output means and extracting and analyzing means (EAM) for analyzing parameters ($b_1$, $b_2$, $m_1$, $m_2$) of the output means, **characterized in that** the extracting and analyzing means (EAM) are provided for analyzing parameters that include measured traffic values (MV1) and signaled values (SV1), where the measured traffic values (MV1) are mean traffic loads and the signaled values (SV1) are equivalent access bandwidths and provided for making available said parameters, where the equivalent access bandwidth value $b_x$ signaled at the element's input is a weighted mean value based on the equivalent access bandwidths values $b_i$ signaled at the element's outputs and where the equivalent access bandwidth value $b_x$ is calculated as

$$b_x = \sum_{i=1}^{N} g_i b_i \; ,$$

with

$$g_i = \frac{m_i}{\sum_{i=1}^{N} m_i} \; ,$$

where N is the number of the element's outputs, and $m_i$ is the mean traffic load value measured at output i of the element.

**Patentansprüche**

1. Verfahren zum Bestimmen von Parametern in einer höheren Netzwerkzugangsebene (M3) eines paketorientierten Netzwerks, wobei eine Netzwarkzugangsebene Netzwerkelamente (M1, M2, M3) mit Eingängen von der jeweiligen niedrigeren Ebene und einem Ausgang zu der jeweiligen höheren Ebene oder zu einem Backbone-Netzwerk umfasst, wobei in jeder Ebene, in welcher Datenströme einer darunterliegenden Ebene summiert werden, Parameter ($b_1$ $b_2$, $b_x$) der Elemente dieser Ebene durch Analysieren der Parameter ($b_1$, $b_2$, $m_1$, $m_2$) der jeweiligen Eingänge extrahiert und an die höhere Ebene oder an das Backbone-Netzwerk über den Ausgang des Jeweiligen Elements bereitgestellt werden, **dadurch gekennzeichnet, dass** die Parameter gemessene Verkehrswerte (MV1) und signalisierte Werte (SV1) umfassen, wobei die gemessenen Verkehrswerte (MV1) mittlere Verkehrslasten und die signalisierten Werte (SV1) äquivalente Zugangsbandbreiten sind, wobei der am Ausgang des Elemente signalisierte Wert $b_x$ der äquivalenten Zugangsbandbreite ein gewichteter mittlerer Wert basierend auf den an den Eingängen des Elements signalisierten Werten $b_l$ der äquivalenten Zugangsbandbreiten ist, und wobei der Wert $b_x$ der äquivalenten Zugangsbandbreite wie folgt berechnet wird:

$$b_x = \sum_{i=1}^{N} g_i\, b_i,$$

mit

$$g_i = \frac{m_i}{\sum_{i=1}^{N} m_i},$$

wobei N die Anzahl der Eingänge des Elements darstellt, und $m_i$ den am Eingang 1 des Elements gemessenen mittleren Wert der Verkehrslast darstellt.

**2.** Netzwerkelement (M1, M2, M3) zum Summieren von Datenströmen eines paketorientierten Netzwerks am Übergang von der niedrigeren Netzwerkebene (M1, M2) zu einer höheren Ebene (M3), umfassend Eingabemittel, Mittel (CE) zum Summieren der Datenströme, ein Ausgabemittel und Extraktions- und Analysemittel (EAM) zum Analysieren der Parameter ($b_1$, $b_2$, $m_1$, $m_2$) der Eingabemittel, **dadurch gekennzeichnet, dass** die Extraktions- und Analysemittel (EAM) bereitgestellt werden, um die Parameter, welche gemessene Verkehrswerte (MV1) und signalisierte Werte (SV1) umfassen, zu analysieren, wobei die gemessenen Verkehrswerte (MV1) mittlere Verkehrslasten sind und die signalisierten Werte (SV1) äquivalente Zugangsbandbreiten sind, und bereitgestellt werden, um die besagten Parameter am Ausgang verfügbar zu machen, wobei der am Ausgang des Elements signalisierte Wert $b_x$ der äquivalenten Zugangsbandbreite ein gewichteter mittlerer Wert basierend auf den an den Eingängen des Elements signalisierten Werten $b_i$ der äquivalenten Zugangsbandbreiten ist, und wobei der Wert $b_x$ der äquivalenten Zugangsbandbreite wie folgt berechnet wird:

$$b_x = \sum_{i=1}^{N} g_i\, b_i,$$

mit

$$g_i = \frac{m_i}{\sum_{i=1}^{N} m_i},$$

wobei N die Anzahl der Eingänge des Elements darstellt, und $m_l$ den am Eingang i des Elements gemessenen mittleren Wert der Verkehrslast darstellt.

**3.** Verfahren nach Anspruch 1, **dadurch gekennzeichnet, dass** in höheren Netzwerkebenen aktuelle Netzwerkressourcen ($B_x$) in Abhängigkeit von den extrahierten Parametern bereitgestellt werden.

**4.** Verfahren nach Anspruch 1, **dadurch gekennzeichnet, dass** im Anschluss an eine Ausgabe eines Elements eine effektive Bandbreite B bereitgestellt wird, wobei

$$B = m \cdot \left(1 + a\sqrt{\frac{b_x}{m}}\right),$$

mit

$$a = \sqrt{2 - erf^{-1}(1 - 2 - P_{loss})},$$

wobei M die aktuelle mittlere Verkehrslast auf dem Ausgang dieses Elements darstellt, $P_{loss}$ die zulässige Verlustwahrscheinlichkeit darstellt, und $erf^{-1}$ die inverse Fehlerfunktion darstellt.

5. Verfahren zum Bestimmen der Parameter in einer höheren Netzwerkzugangsebene eines paketorientierten Netzwerks, wobei eine Netzwerkzugangsebene Netzwerkelemente (M1, M2, M3) mit Ausgängen zu der jeweiligen niedrigeren Ebene und einem Eingang von der jewelligen höheren Ebene oder von einem Backbone-Netzwerk umfasst, wobei in jeder Ebene, in welcher Datenströme, einer darunterliegenden Ebene verteilt werden, Parameter ($b_1$, $b_2$, $b_x$) der Elemente dieser Ebene durch Analysieren der Parameter ($b_1$, $b_2$, $m_1$, $m_2$) der jeweiligen Ausgänge extrahiert und an die höhere Ebene oder an das Backbone-Netzwerk über den Ausgang des jeweiligen Elements bereitgestellt werden, **dadurch gekennzeichnet, dass** die Parameter gemessene Verkehrswerte (MV1) und signalisierte Werte (SV1) umfassen, wobei die gemessenen Verkehrswerte (MV1) mittlere Verkehrslasten und die signalisierten Werte (SV1) äquivalente Zugangsbandbreiten sind, wobei der am Eingang des Elements signalisierte Wert $b_x$ der äquivalenten Zugangsbandbreite ein gewichteter mittlerer Wert basierend auf den an den Ausgängen des Elements signalisierten Werten $b_1$ der äquivalenten Zugangsbandbreiten ist, und wobei der Wert $b_x$ der äquivalenten Zugangsbandbreite wir folgt berechnet wird

$$b_x = \sum_{i=1}^{N} g_i b_i,$$

mit

$$g_i = \frac{m_i}{\sum_{i=1}^{N} m_i},$$

wobei N die Anzahl der Ausgänge des Elements darstellt, und $m_l$ den am Ausgang i des Elements gemessenen mittleren Wert der Verkehrslast darstellt.

6. Netzwerkelement (M1, M2, M3) zum Verteilen von Datenströmen eines paketorientierten Netzwerks am Übergang von einer höheren Netzwerkebene (M3) zu einer niedrigeren Ebene (M1, M2), umfassend ein Eingabemittel, Mittel zum Verteilen der Datenströme, Ausgabemittel und Extraktions- und Analysemittel (EAM) zum Analysieren der Parameter ($b_1$, $b_2$, $m_1$, $m_2$) der Ausgabemittel, **dadurch gekennzeichnet, dass** die Extraktions- und Analysemittel (EAM) bereitgestellt werden, um die Parameter, welche gemessene Verkehrswerte (MV1) und signalisierte Werte (SV1) umfassen, zu analysieren, wobei die gemessenen Verkehrswerte (MV1) mittlere Verkehrslasten sind und die signalisierten Werte (SV1) äquivalente Zugangsbandbreiten sind, und bereitgestellt werden, um die besagten Parameter verfügbar zu machen, wobei der am Eingang des Elements signalisierte Wert $b_x$ der äquivalenten Zugangsbandbrelte ein gewichteter mittlerer Wert basierend auf den an den Ausgängen des Elements signalisierten Werten $b_i$ der äquivalenten Zugangsbandbreiten ist, und wobei der Wert $b_x$ der äquivalenten Zugangsbandbreite wie folgt berechnet wird:

$$b_x = \sum_{i=1}^{N} g_i b_i,$$

mit

$$g_i = \frac{m_i}{\sum_{i=1}^{N} m_i},$$

wobei N die Anzahl der Ausgänge des Elements darstellt, und $m_l$ den am Ausgang des Elements gemessenen mittleren Wert der Verkehrslast darstellt.

**Revendications**

1. Procédé pour déterminer des paramètres dans un plan d'accès réseau supérieur (M3) d'un réseau orienté paquets, un plan d'accès réseau comprenant des éléments de réseau (M1, M2, M3) avec des entrées provenant du plan inférieur respectif et une sortie en direction du plan supérieur respectif ou en direction d'un réseau de base, où dans chaque plan, où des flux de données d'un plan sous-jacent sont additionnés, des paramètres ($b_1$, $b_2$, $b_x$) des éléments de ce plan sont extraits en analysant des paramètres ($b_1$, $b_2$, $m_1$, $m_2$) des entrées respectives et mis à disposition du plan supérieur ou du réseau de base par l'intermédiaire de la sortie de l'élément respectif, **caractérisé en ce que** les paramètres comprennent des valeurs de trafic mesurées (MV1) et des valeurs signalées (SV1), dans lequel les valeurs de trafic mesurées (MV1) sont des charges de trafic moyennes et les valeurs signalées (SV1) sont des largeurs de bande d'accès équivalentes, dans lequel la valeur de largeur de bande d'accès équivalente $b_x$ signalée au niveau de la sortie de l'élément est une valeur moyenne pondérée basée sur les valeurs de largeurs de bande d'accès équivalentes $b_l$ signalées au niveau des entrées de l'élément et dans lequel la valeur de largeur de bande d'accès équivalente $b_x$ est calculée comme suit

$$b_x = \sum_{i=1}^{N} g_i b_i$$

avec

$$g_i = \frac{m_i}{\sum_{i=1}^{N} m_i}$$

où N est le nombre des entrées de l'élément, et $m_l$ est la valeur de charge de trafic moyenne mesurée au niveau de l'entrée i de l'élément.

2. Élément de réseau (M1, M2, M3) pour additionner des flux de données d'un réseau orienté paquets au niveau de la transition entre un plan de réseau inférieur (M1, M2) et un plan supérieur (M3), comprenant des moyens d'entrée, des moyens (CE) pour additionner les flux de données, un moyen de sortie et des moyens d'extraction et d'analyse (EAM) pour analyser des paramètres ($b_1$, $b_2$, $m_1$, $m_2$) des moyens d'entrée, **caractérisé en ce que** les moyens d'extraction et d'analyse (EAM) sont prévus pour analyser des paramètres qui comprennent des valeurs de trafic mesurées (MV1) et des valeurs signalées (SV1), où les valeurs de trafic mesurées (MV1) sont des charges de trafic moyennes et les valeurs signalées (SV1) sont des largeurs de bande d'accès équivalentes et prévus pour mettre à disposition lesdits paramètres au niveau de la sortie, où la valeur de largeur de bande d'accès équivalente $b_x$ signalée au niveau de la sortie de l'élément est une valeur moyenne pondérée basée sur les valeurs de largeurs de bande d'accès équivalentes $b_i$ signalées au niveau des entrées de l'élément et où la valeur de largeur de bande d'accès équivalente $b_x$ est calculée comme suit

$$b_x = \sum_{i=1}^{N} g_i b_i$$

avec

$$g_i = \frac{m_i}{\sum_{i=1}^{N} m_i}$$

où N est le nombre des entrées de l'élément, et $m_i$ est la valeur de charge de trafic moyenne mesurée au niveau de l'entrée i de l'élément.

3. Procédé selon la revendication 1, **caractérisé en ce que** dans des plans de réseau supérieurs des ressources de réseau réelles ($B_x$) sont fournies en fonction des paramètres extraits.

4. Procédé selon la revendication 3, **caractérisé en ce que**, suite à une sortie d'un élément, une largeur de bande effective B est fournie, où

$$B = m - \left(1 + a\sqrt{\frac{b_x}{m}}\right),$$

avec

$$a = \sqrt{2 - erf^{-1}(1 - 2 - P_{loss})},$$

m étant la charge de trafic moyenne réelle sur la sortie de cet élément,
$P_{loss}$ étant la probabilité de perte permise, et $erf^{-1}$ étant la fonction d'erreur inverse.

**5.** Procédé pour déterminer des paramètres dans un plan d'accès réseau supérieur d'un réseau orienté paquets, un plan d'accès réseau comprenant des éléments de réseau (M1, M2, M3) avec des sorties en direction du plan inférieur respectif et une entrée provenant du plan supérieur respectif ou d'un réseau de base, où dans chaque plan, où des flux de données d'un plan sous-jacent sont distribués, des paramètres ($b_1$, $b_2$, $b_x$) des éléments de ce plan sont extraits en analysant des paramètres ($b_1$, $b_2$, $m_1$, $m_2$) des sorties respectives et mis à disposition du plan supérieur ou du réseau de base par l'intermédiaire de la sortie de l'élément respectif, **caractérisé en ce que** les paramètres comprennent des valeurs de trafic mesurées (MV1) et des valeurs signalées (SV1), dans lequel les valeurs de trafic mesurées (MV1) sont des charges de trafic moyennes et les valeurs signalées (5V1) sont des largeurs de bande d'accès équivalentes, dans lequel la valeur de largeur de bande d'accès équivalente $b_x$ signalée au niveau de l'entrée de l'élément est une valeur moyenne pondérée basée sur les valeurs de largeurs de bande d'accès équivalentes $b_1$ signalées au niveau des sorties de l'élément et dans lequel la valeur de largeur de bande d'accès équivalente $b_x$ est calculée comme suit

$$b_x = \sum_{i=1}^{N} g_i\, b_i,$$

avec

$$g_i = \frac{m_i}{\sum_{i=1}^{N} m_i},$$

où N est le nombre des sorties de l'élément, et $m_1$ est la valeur de charge de trafic moyenne mesurée au niveau de la sortie I de l'élément.

**6.** Élément de réseau (M1, M2, M3) pour distribuer des flux de données d'un réseau orienté paquets au niveau de la transition entre un plan de réseau supérieur (M3) et un plan inférieur (M1, M2), comprenant un moyen d'entrée, des moyens pour distribuer les flux de données, des moyens de sortie et des moyens d'extraction et d'analyse (EAM) pour analyser des paramètres ($b_1$, $b_2$, $m_1$, $m_2$) des moyens de sortie, **caractérisé en ce que** les moyens d'extraction et d'analyse (EAM) sont prévus pour analyser des paramètres qui comprennent des valeurs de trafic mesurées (MV1) et des valeurs signalées (SV1), où les valeurs de trafic mesurées (MV1) sont des charges de trafic moyennes et les valeurs signalées (SV1) sont des largeurs de bande d'accès équivalentes et prévus pour mettre à disposition lesdits paramètres, où la valeur de largeur de bande d'accès équivalente $b_x$ signalée au niveau de l'entrée de l'élément est une valeur moyenne pondérée basée sur les valeurs de largeurs de bande d'accès équivalentes $b_l$ signalées au niveau des sorties de l'élément et où la valeur de largeur de bande d'accès équivalente $b_x$ est calculée comme suit

$$b_x = \sum_{i=1}^{N} g_i\, b_i,$$

avec

$$g_i = \frac{m_i}{\sum_{i=1}^{N} m_i}$$

où N est le nombre des sorties de l'élément, et $m_l$ est la valeur de charge de trafic moyenne mesurée au niveau de la sortie 1 de l'élément.

$$g_i = \frac{m_i}{\sum_{i=1}^{N} m_i}$$

Fig. 1

Fig. 2

## REFERENCES CITED IN THE DESCRIPTION

**Patent documents cited in the description**

- WO 0207473 A

**Non-patent literature cited in the description**

- **GUÉRIN et al.** Equivalent Capacity and Its Application to Bandwidth Allocation in High-Speed Networks. *IEEE Journal on selected areas in communication,* September 1991, vol. 9 (7